# EUROPEAN PATENT SPECIFICATION

(11) **EP 2 782 445 B1**
(45) Date of publication and mention of the grant of the patent: **23.03.2016**
(21) Application number: 12788565.5
(22) Date of filing: 22.11.2012
(51) Int. Cl.: A01N 25/02, A01N 51/00, A01N 43/90, A01N 43/58, A01N 43/12, A01N 43/60

(54) **AGRICULTURAL FORMULATIONS WITH AROMATIC SOLVENTS AND ACYL MORPHOLINES**
LANDWIRTSCHAFTLICHE FORMULIERUNGEN MIT AROMATISCHEN LÖSUNGSMITTELN UND ACYLMORPHOLINEN
FORMULATIONS AGRICOLES AVEC SOLVANTS AROMATIQUES ET MORPHOLINES ACYLES

(30) Priority: 24.11.2011 EP 11190509; 28.11.2011 US 201161564002 P
(43) Date of publication of application: 01.10.2014
(73) Proprietor: Akzo Nobel Chemicals International B.V., 6824 BM Arnhem (NL)
(72) Inventor: WESTBYE, Peter, S-444 45 Stenungsund (SE); BERGSTRÖM, Karin, S-442 95 Hålta (SE); LEE, Chin Chiat, Singapore 650622 (SG); PAUL, Rupak, Singapore 520870 (SG)
(74) Representative: Akzo Nobel IP Department
(86) International application number: PCT/EP2012/073372
(87) International publication number: WO 2013/076202

(56) References cited:
- EP-A1- 1 961 301
- WO-A2-2007/140332
- WO-A2-2011/147822
- GB-A- 1 299 044
- US-A- 4 452 630
- ISHIMURA I ET AL: "Agrochemical emulsion compsn. used as herbicide - contains phenyl urea type cpd., low polarity solvent and polar solvent to prevent crystal pptn", WPI / THOMSON,, vol. 1995, no. 15, 3 February 1995 (1995-02-03), XP002601846, & JP 7 033605 A (NIHON NOHYAKU CO LTD) 3 February 1995 (1995-02-03)

## Description

### Field of Invention

The present invention relates in general to a solvent system comprising an aromatic hydrocarbon and an acyl morpholine as a solvent for agriculturally active ingredients. The invention also relates to a formulation comprising an agriculturally active ingredient and such a solvent system.

### Background of the Invention

Agriculturally active ingredients, such as pesticides and plant growth regulators, have conventionally been provided to the end-user in different concentrated forms to be diluted in water or other suitable medium to form a dilute ready-to-use formulation by the end-user. Such concentrated forms include solid formulations, e.g. powders, and liquid formulations. In many applications, liquid formulations are preferred as problems of dusting of toxic powders and slow dissolution in the diluent may be avoided.

An emulsion concentrate typically comprises an agricultural active ingredient, a water-insoluble solvent, and an emulsifier, and when added to the water, it spontaneously, or after active mixing, e.g. stirring, forms an oil-in-water emulsion, the agricultural active primarily being present in the emulsion droplets. This type of concentrated formulation is especially suitable for agricultural active ingredients that are water insoluble/have low water solubility, and where the recommended concentration in the ready-to-use formulation exceeds the solubility of the agricultural active ingredient.

It is important that the active ingredient is stably dissolved in the emulsion concentrate. Precipitation of the agriculturall active ingredient may result in a loss of efficacy. Should the active ingredient be concentrated to the precipitates, it is prevented from being evenly distributed when sprayed on a field.

US 2009/0062120 suggests to use caprolactam, or certain derivatives thereof, as a solubilizer for agrochemical substances.

There is thus a need in the field to find new and improved solvents/solvent systems for agriculturally active ingredients, which can be used in agricultural formulations, especially in form of emulsion concentrates.

### Summary of the Invention

One object of the present invention is to meet the needs in the art and to provide a solvent that can be used in agricultural formulations.

Another object of the invention is to provide a solvent for agricultural actives that allows for a concentrated formulation of solvent and agricultural active, in which the agriculturally active ingredient have a reduced tendency to form precipitates.

Another object of the invention is to provide a solvent for agricultural active ingredients that allows for a concentrated formulation of solvent and agricultural active to be mixed with an aqueous medium without or with only minor precipitation of the active ingredient.

The present inventors have now surprisingly found that certain combinations comprising aromatic hydrocarbons and acyl morpholines are suitable as solvent systems for agriculturally active ingredients. These combinations have been especially useful in emulsfiable concentrated formulations.

In a first aspect, the present invention relates to a formulation comprising a) at least one agriculturally active ingredient, b) at least one aromatic hydrocarbon c) at least one acyl morpholine of formula (I), 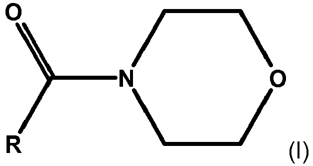 where R is H, CH₃ or C₂H₅,
d) optionally at least one polar aprotic solvent different from an acyl morpholine of formula (I), and
e) optionally additional component(s).

The formulation may be a fully or essentially anhydrous formulation or may be an aqueous formulation, such as an emulsion.

In a second aspect, the present invention relates to a method for treating a plant, by contacting said plant with a formulation of the invention.

In a third aspect, the present invention relates to the use of a solvent system comprising aromatic solvent and an acyl morpholine of formula (I) and optionally a polar aprotic solvent, as a solvent for an agricultural active.

These and further aspects will now be described further.

### Detailed Description of the Invention

The agriculturally active ingredients contemplated for use in the present invention, also referred to in the art as agricultural actives, are preferably selected from the group consisting of pesticides and plant growth regulators.

The agriculturally active ingredients are preferably selected amongst those having low water solubility, and most preferably amongst those being water insoluble.

The term "agriculturally active ingredient" as used herein is to be taken as encompassing any organic compound being agriculturally active. However, to the extent that the aromatic hydrocarbon, the acyl morpholines of the formula (I) or the polar aprotic co-solvents as defined herein, are agriculturally active, these are not considered as agriculturally active ingredients.

The term "compound having low water solubility" as defined herein, relates to a compound having a solubility of at most 5, such as at most 1 g/l, for example at most 0.7 g/l in water.

In the context of the present invention, water solubility is measured according to ASTM E 1148-87 "Standard Test Method for Measurements of Aqueous Solubility".

As used herein, the term "pesticide" refers to a compound that will prevent, destroy, repel, or mitigate any pest.

As used herein, the term "plant growth regulator" refers to a compound, which through physiological action will accelerate or retard the rate of growth or rate of maturation or otherwise alter the behaviour of ornamental or crop plants or the products thereof.

Pesticides and plant growth regulators especially contemplated for use in the present invention are organic compounds, preferably synthetic organic compounds.

Pesticides contemplated for use in the present invention include, fungicides, herbicides, insecticides, miticides, nematicides, acaricides, and molluscicides. Preferred agriculturally active ingredients contemplated for use in the present invention include pesticides and plant growth regulators of the classes triazoles, strobilurins, alkylenebis(dithiocarbamate) compounds, benzimidazoles, phenoxy carboxylic acids, benzoic acids, sulfonylureas, triazines, pyridine carboxylic acids, neonicotinides, amidines, organophosphates, and pyrethroids.

Examples of fungicides contemplated for use in the present invention include fungicides of the classes triazoles (e.g. tebuconazole, tetraconazole, cyproconazole, epoxiconazole, difenconazole, propiconazole, prothioconazole), strobilurins (e.g. trifloxystrobin, azoxystrobin, fluoxastrobin, pyraclostrobin), alkylenebis(dithiocarbamate) compounds (e.g. mancozeb) and benzimidazoles (e.g carbendazim).

Examples of herbicides contemplated for use in the present invention include phenoxy carboxylic acids (e.g. 2,4-D-acid, MCPA), benzoic acids (e.g. Dicamba-acid), sulfonylureas (e.g. methylsulfuron-methyl, rimsulfuron), triazines (e.g. atrazine and simazine), triazolinones (e.g. amicarbazone) and pyridine carboxylic acids (e.g. triclopyr).

Examples of insecticides contemplated for use in the present invention include neonicotinides (e.g. thiamethoxam, clothianidin, thiacloprid, dinotefuran, acetamiprid, nitenpyram, imidacloprid), amidines (e.g. amitraz), organophosphates (e.g. chlorpyrifos) and pyrethroids (e.g. permethrin, bifenthrin, deltamethrin).

For a detailed description of each of the above-mentioned pesticides and plant growth regulators, reference is made to handbooks, e.g. "The e-Pesticide Manual v4.0" from BCPC Publications Ltd, Alton, Hampshire. (ISBN 1 901396 42 8).

The aromatic hydrocarbon may be any aromatic hydrocarbon or a mixture of aromatic hydrocarbons suitable for use in agricultural formulations.

Examples of such aromatic hydrocarbons include, toluene, xylene and other alkylated benzenes, such as trimethyl benzene, methyl ethyl benzene, *n*-propyl benzene, isopropyl benzene, methyl isopropyl benzene, methyl *n*-propyl benzene, diethylbenzene, tetramethylbenzene, and mixtures of two or more thereof, optionally with additional components. Industrial aromatic hydrocarbons, such as Solvesso 100, Solvesso 150, Solvesso 150 ND, Solvesso 200 and Solvesso 200 ND available from ExxonMobil, Shellsol X7B, Shellsol A100, Shellsol A150 and Shellsol A150ND, available from Shell Chemicals, and Farbasol, available from Orlen Oil, are also contemplated as the aromatic hydrocarbon for use in the present invention.

The aromatic hydrocarbon typically has an initial boiling point (IBP) in the range of from 100 to 270°C, preferably in the range of 150 to 250°C, and a dry point (DP) of from 100 to 320°C, preferably in the range of from 170 to 310°C. In the context of the present invention, the values of initial boiling point and the dry point are as obtained by the method according to ASTM D86.

The aromatic hydrocarbon typically has a mixed aniline point of below 25°C, such as in the range of from 5, for example from 9, to 20, for example to 16°C, as measured according to the method of ASTM D611.

The aromatic hydrocarbon typically has a kinematic viscosity at 25°C of from 0.6 to 3.7 mm²/s, preferably from 0.9 to 3.6 mm²/s. In the context of the present invention, the values of kinematic viscosity are as obtained at 25°C by the method of ASTM D445.

In one embodiment, the aromatic hydrocarbon is a mixture having an initial boiling point in the range of from 160 to 170° and a dry point in the range of from 175 to 185°C, and preferably a viscosity of from 0.88 to 0.98 mm²/s.

In another embodiment, the aromatic hydrocarbon is a mixture having an initial boiling point in the range of from 176 to 186° and a dry point in the range of from 202 to 212°C, and preferably a viscosity of from 1.18 to 1.28 mm²/s.

In another embodiment, the aromatic hydrocarbon is a mixture having an initial boiling point in the range of from 174 to 184° and a dry point in the range of from 189 to 199°C, and preferably a viscosity of from 1.11 to 1.21 mm²/s.

In another embodiment, the aromatic hydrocarbon is a mixture having an initial boiling point in the range of from 222 to 232° and a dry point in the range of from 282 to 292°C, and preferably a viscosity of from 2.98 to 3.08 mm²/s.

In another embodiment, the aromatic hydrocarbon is a mixture having an initial boiling point in the range of from 237 to 247° and a dry point in the range of from 294 to 304°C, and preferably a viscosity of from 3.49 to 3.59 mm²/s.

The acyl morpholines contemplated for use in a formulation of the present invention include 4-formyl morpholine (R = H, also referred to as N-formyl morpholine or NFM), 4-acetyl morpholine (R = CH₃, also referred to as N-acetyl morpholine or NAM), 4-propionyl morpholine (R = C₂H₅, also referred to as N-propionyl morpholine or NPM) and mixtures thereof, preferably 4-formyl morpholine. Preferably, 4-formyl morpholine represents at least 50, most preferably at least 90, such as 100 wt% of the acyl morpholines of formula (I) present in the formulation. However, for formulations comprising the pesticide N,N'-bis-[(1-formamido-2,2,2-trichloro)ethyl]piperazine, it is preferred that the acyl morpholine is selected from 4-acetyl morpholine and 4-propionyl morpholine.

The acyl morpholines as such are well known compounds and are commercially available from standard chemical suppliers.

Polar aprotic solvents, which are different from an acyl morpholine of formula (I), herein referred to as "polar aprotic solvents", may be included in formulations of the present invention.

The polar aprotic solvent is preferably selected from those polar aprotic solvents having a flash point of at least 65°C, as measured according to ASTM D93.

The polar aprotic solvent is preferably selected from the group consisting of a sulfoxide, an amide, a hydrocarbyl- or hydrocarbylene carbonate, and mixtures thereof. Preferred sulfoxides include dimethyl sulfoxide. Preferred hydrocarbyl carbonates include di-alkyl carbonates, such as those with C₁-C₈ alkyl chains. Preferred hydrocarbylene-carbonates include alkylene carbonates, more preferably C₂-C₄-alkylenecarbonates, most preferably propylene carbonate. More preferably, the polar aprotic co-solvent is selected from the group consisting of dimethyl sulfoxide, propylene carbonate and mixtures thereof, most preferably propylene carbonate.

One or more additional components may be present in a formulation of the invention. Examples of such additional components include one or more adjuvants, such as bioefficacy enhancers that increase the bioefficacy of agricultural actives, humectants, wetting agents, rheology modifiers, surfactants, emulsifiers, stickers, drift reducers and/or other additional components conventionally used in agricultural compositions.

Water is not contemplated for use as a member of the above "additional components". A formulation of the present invention may be a fully or essentially anhydrous formulation, such as comprising less than 10, preferably less than 1 wt% of water, or may be an aqueous formulation, such as an emulsion, typically an oil-in-water emulsion, usually comprising at least 90, such as at least 99 wt% water, based on the total weight of the formulation of the invention.

The concentration of the at least one agriculturally active ingredient in a formulation of the present invention is suitably within the solubility range of the specific compound in the specific solvent system.

The concentration of the agriculturally active ingredient in a formulation of the present invention is usually from about 0.1, such as from about 10, for example from about 20, to about 950, such as to about 500, for example to about 300 g/l based on the total volume of an anhydrous formulation of a formulation of the invention.

In formulations of the present invention, the concentration of the at least one agriculturally active ingredient may be from 50 to 250 g/l.

The concentration of the aromatic hydrocarbon in a formulation of the present invention is usually from 25, such as from 50, for example from 100, to 900, such as to 700, for example to 500 g/l based on the total volume of an anhydrous formulation of the invention.

When a polar aprotic solvent is present, the weight ratio between acyl morpholine of formula (I) and polar aprotic solvent is usually from 5:95, from 30:70, from 50:50, from 70:30, or from 75:25, to 95:5, to 90:10, or to 85:15. For example, the weight ratio between acyl morpholine of formula (I) and polar aprotic solvent may be about 80:20.

A formulation of the present invention may comprise from about 10, such as from 50, or from 100, to about 600, such as to about 400, or to about 250 g/l of the total of c) acyl morpholine of the formula (I) and, if present, d) polar aprotic co-solvent, based on the total volume of an anhydrous formulation of the invention.

If present, the concentration of additional components in a formulation of the present invention is usually from 10, such as from 20, or from 50, to 250, such as to 150, or to 100 g/l based on the total volume of an anhydrous formulation of the invention.

The formulations according to the invention may be prepared in such a manner that the components are mixed with one another in the desired ratios and to the desired concentrations. In general, the formulations are prepared at a temperature of between 10 and 50°C. Apparatuses that are employed for the preparation of agricultural formulations can also be employed as apparatuses for the preparation of the formulations of the present invention.

The composition of the present invention may be an emulsifiable concentrated composition, hereinafter and in the art commonly referred to as an "emulsifiable concentrate", or "EC", comprising a formulation as defined herein, including an emulsifying agent. Hence, such an emulsifiable concentrate comprises an agriculturally active ingredient, an aromatic hydrocarbon, an acyl morpholine of the formula (I), optionally a polar aprotic co-solvent, and an emulsifier.

The concentration of agriculturally active ingredient is usually too high for end-use, and the emulsifiable concentrate is intended to be diluted with an aqueous medium into a work-composition.

The emulsifiable concentrate preferably comprises water in an amount below the amount at which an oil-in-water emulsion is formed. Preferably, the emulsifiable concentrate comprises less than about 10, more preferably less than about 1 wt% of water, based on the total weight of the emulsifiable concentrate. Most preferably, the emulsifiable concentrate of the present invention is essentially free from water in the sense that the emulsifiable concentrate does not contain water beyond what is inevitable from the equilibrium with the surrounding atmosphere.

Emulsifiers contemplated for use in the present invention include surfactants known as emulsifying agents by those skilled in the art, e.g. anionic surfactants, non-ionic surfactants, polymers, and blends thereof, especially blends comprising anionic and non-ionic surfactants.

Examples of non-ionic surfactants contemplated for use as emulsifying agents in the present invention include, but are not limited to alkoxylated, preferably ethoxylated and/or propoxylated alcohols, preferably containing from 8 to 22 carbon atoms; alkyl(poly)glycosides, such as straight or branched C₄-C₁₀ alkyl(poly)glycosides; alkoxylated, preferably ethoxylated, sorbitan or sorbitol esters; castor oil ethoxylates; and tristyrylphenol alkoxylates. Preferred ethoxylated alcohols have a degree of ethoxylation of from 1 to 50, more preferably 2 to 20, most preferably 3 to 10. Examples of alkoxylated alcohols contemplated for use in the present invention include those based on branched alcohols, such as the Guerbet alcohols, e.g. 2-propylheptanol and 2-ethylhexanol, and C₁₀- or C₁₃-OXO-alcohols, i.e. an alcohol mixture whose main component is formed by at least one branched C₁₀- or C₁₃-alcohol, and the alcohols commercially available as Exxal alcohols from Exxon Mobile Chemicals and Neodol alcohols from Shell Chemicals.

Examples of anionic surfactants contemplated for use as emulsifying agents in the present invention include sulfosuccinates, alkylbenzene sulfonic acid salts, such as calcium or sodium dodecylbenzene sulfonate, alkyl sulphonates, alkyl ether sulphates, phosphate esters of optionally alkoxylated, preferably ethoxylated and/or propoxylated, alcohols, xylene or cumene sulfonate salts, and naphthalene or alkylnaphthalene sulfonates, which may be condensated, and mixtures thereof

Examples of polymers for use alone or in combination as emulsifying agent include ethylene oxide-propylene oxide block co-polymers, acrylic acid based comb polymers, xanthan gum and mixtures thereof.

In an emulsifiable concentrate of the present invention, the concentration of emulsifier is usually from 10, such as from 50, to 200 such as to 150 g/l based on the total volume of an anhydrous formulation of the invention.

The present invention also relates to an aqueous, oil-in-water, emulsion comprising an aqueous medium, at least one agriculturally active ingredient, preferably having low water solubility, an aromatic hydrocarbon, an acyl morpholine according to the formula (I), an emulsifier and, optionally, a polar aprotic solvent and/or additional components.

For example, such an emulsion may be obtained by mixing an aqueous medium and an emulsifiable concentrate as previously defined herein or by separately mixing the components.

As used herein, the term "emulsion" shall be interpreted to include macro emulsions, nano emulsions, micro emulsions and suspo-emulsions, i.e. emulsions in which a particulate solid is suspended.

The aqueous medium that is a component of the emulsion of the present invention usually comprises water as the major component. Preferably, water constitutes at least 50 wt% such as at least 75 wt%, for example at least 90 wt% of the aqueous medium. The aqueous medium may further comprise other components, e.g. salts buffering agents, pH-controlling agents, such as acids or bases, fertilizers, etc.

When the emulsifiable concentrate is mixed with the aqueous medium, an emulsion is formed, the emulsion usually being the work composition that will be used by the end-user, with the advantage that the end-user does not have to handle and store large quantities of work composition, but can prepare the amounts necessary for the moment.

Emulsions of the present invention may be prepared by mixing an emulsifiable concentrate of the invention with an aqueous medium at a volume ratio between the emulsifiable concentrate and aqueous medium of from about 1:25, preferably from about 1:50, more preferably from about 1:100; to about 1:1000, preferably to about 1:500, more preferably to about 1:300. In a representative emulsion of the present invention, the volume ratio emulsifiable concentrate:aqueous medium is about 1:200.

An advantage of the present invention is that the agriculturally active ingredient exhibit a low, or no, tendency to precipitate or crystallise when the formulation is in concentrated form, i.e. comprising less than 10 wt% water, preferably less than 1 wt% water

Another advantage of the present invention is that even at high dilutions in the emulsion, i.e. at low ratios between the formulations and the aqueous medium, the tendency of the agriculturally active ingredient to precipitate or crystallise is low, also at temperatures significantly below room temperature, such as at 5°C. This is advantageous for many reasons. Should it be necessary for the end-user to stop spraying before having consumed a full batch of emulsion, the unused emulsion will be possible to use later, for example the next day, even if the unused emulsion was stored at reduced temperatures.

In a further aspect, the present invention provides a method for treating a plant or seed, wherein the plant or seed is contacted with a formulation of the invention. The desired amount of agriculturally active ingredient to be contacted with a plant or seed by means of such method depends on several parameters, such as the biological activity of the agriculturally active, but generally, the amount is adjusted to be sufficient for the agriculturally active ingredient to perform its desired activity.

As used herein, "plant" includes all parts of a plant, including roots, stems, leaves, flowers and fruits.

In one embodiment of the treatment method, the plant or seed is contacted with a formulation of the present invention, usually an oil-in-water emulsion, by means of spraying.

In another embodiment of the treatment method, a plant or a seed, usually a seed, is contacted with a formulation of the invention by dipping or soaking the plant or seed in the formulation.

### Experiments

### Example 1

To obtain the formulations disclosed in table 1 below, agriculturally active ingredient (Al), emulsifier, aromatic hydrocarbon and a mixture of N-formyl-morpholine (NFM) and propylene carbonate (PC) (80:20 wt:wt) was mixed together to the required amounts with a magnetic stirrer until the active ingredient dissolved in the formulation.

The finished formulations were put into a refrigerator for seven days at 0°C. All formulations were judged by the naked eye if it contained any crystals after the storing. The results are shown in Table 1.

**Table 1**

| **Formul.** | **Al** | **Emulsifiers*** | **NFM:PC (80:20)** | **Aromatic Hydrocarbon (Added to 1 l)** | **Crystals formed** |
|---|---|---|---|---|---|
| **1**** | 100g/l Imidacloprid | 70 g/l Ethylan NS500 LQ + 30 g/l Sponto AP 202 | - | Solvesso 150 | **Yes** |
| **2** | 100g/l Imidacloprid | 70 g/l Ethylan NS 500 LQ + 30 g/l Sponto AP 202 | 540 g/l | Solvesso 150 | **No** |
| **3**** | 40 g/l Emamectin Benzoate | 80 g/l Berol 904 + 20 g/l Berol 822 | - | Solvesso 200 | **Yes** |
| **4** | 40 g/l Emamectin Benzoate | 80 g/l Berol 904 + 20 g/l Berol 822 | 200 g/l | Solvesso 200 | **No** |
| **5**** | Pyridaben 135 g/l | 150 g/l Sponto AP202 | - | Xylene | **Yes** |
| **6** | Pyridaben 135 g/l | 150 g/l Sponto AP 202 | 50 g/l | Xylene | **No** |
| **7**** | 2,4-D-IBE 200g/l Thiobencarb 400 g/l | 45 g/l Sponto 500T + 15 g/l Sponto 300T | - | Solvesso 100 | **Yes** |
| **8** | 2,4-D-IBE 200g/l Thiobencarb 400 g/l | 45 g/l Sponto 500T + 15 g/l Sponto 300T | 50 g/l | Solvesso 100 | **No** |
| **9**** | 2,4-D-IBE 274g/l Thiobencarb 647g/l | 30 g/l Sponto 500T + 30 g/l Sponto 300T | - | Solvesso 100 | **Yes** |
| **10** | 2,4-D-IBE 274g/l Thiobencarb 647g/l | 30 g/l Sponto 500T + 30 g/l Sponto 300T | 30 g/l | Solvesso 100 | **No** |
| **11**** | 250 g/l quizalofop-p-ethyl | 40 g/l Berol 9968 + 40 g/l Berol 9969 | - | Solvesso 150 | **Yes** |
| **12** | 250 g/l quizalofop-p-ethyl | 40 g/l Berol 9968 + 40 g/l Berol 9969 | 100g/l | Solvesso 150 | **No** |

| | | | | | |
|---|---|---|---|---|---|
| * Emulsifiers available from Akzo Nobel Surface Chemistry AB, Stenungsund, Sweden ** Comparative example | | | | | |

From the results, it is evident that the inclusion of acyl morpholine and polar aprotic solvent in the aromatic hydrocarbon reduces the formation of crystals.

### Example 2

To obtain formulations disclosed in table 2, agriculturally active ingredient was added to measuring flask along with the N-formyl morpholine (NFM), propylene carbonate (PC) and emulsifier to the required amounts. Aromatic hydrocarbon, Solvesso 150 ND was then added so that the whole mixture amounted to 1l. The mixture was stirred with a magnetic stirrer until the active dissolved in the formulation. Finished formulations were put into a refrigerator for seven days at 0°C.

All formulations were judged by the naked eye if it contained any crystals after the storing. The results are shown in table 2.

**Table 2**

| **Formul.** | **Al** | **Emulsifiers (g/l)** | **NFM (g/l)** | **PC (g/l)** | **Solvesso 150 ND** | **Crystals formed** |
|---|---|---|---|---|---|---|
| **13**** | 250g/l Quizalafop-p- ethyl | 80^{(A)} | 0 | 0 | Up to 1 l | **Yes** |
| **14** | 250g/l Quizalafop-p- ethyl | 80^{(A)} | 200 | 0 | Up to 1 l | **No** |
| **15** | 250g/l Quizalafop-p- ethyl | 80^{(A)} | 160 | 40 | Up to 1 l | **No** |
| **16** | 250g/l Quizalafop-p- ethyl | 80^{(A)} | 140 | 60 | Up to 1 l | **No** |
| **17** | 250g/l Quizalafop-p- ethyl | 80^{(B)} | 200 | 0 | Up to 1 l | **No** |
| **18** | 250g/l Quizalafop-p- ethyl | 80^{(B)} | 160 | 40 | Up to 1 l | **No** |
| **19** | 250g/l Quizalafop-p- ethyl | 80^{(B)} | 120 | 80 | Up to 1 l | **No** |
| **20**** | 250g/l Tebuconazole | 100^{(A)} | 0 | 0 | Up to 1 l | **Yes** |
| **21** | 250g/l Tebuconazole | 100^{(A)} | 180 | 0 | Up to 1 l | **No** |
| **22** | 250g/l Tebuconazole | 100^{(A)} | 144 | 36 | Up to 1 l | **No** |
| **23** | 250g/l Tebuconazole | 80^{(B)} | 200 | 0 | Up to 1 l | **No** |
| **24**** | 250g/l Tebuconazole | 100^{(A)} | 0 | 180 | Up to 1 l | **Yes** |
| **25**** | 100g/l Imidacloprid | 100^{(A)} | 0 | 0 | Up to 1 l | **Yes** |
| **26** | 100g/l Imidacloprid | 100^{(A)} | 448 | 112 | Up to 1 l | **No** |
| **27** | 100g/l Imidacloprid | 80^{(B)} | 448 | 112 | Up to 1 l | **No** |

| | | | | | | |
|---|---|---|---|---|---|---|
| A- 50 wt% 2-ethyl hexanol alkoxylated with 35 moles propylene oxide and 32 moles ethylene oxide per mole alcohol (2EH+35PO+32EO), 20 wt% Calcium dodecyl bensen sulfonate and 20wt% n-butanol B- 50 wt% 2-ethyl hexanol alkoxylated with 35 moles propylene oxide and 32 moles ethylene oxide per mole alcohol (2EH+35PO+32EO), 20 wt% Calcium dodecyl bensen sulfonate and 20wt% Solvesso 150ND ** Comparative example | | | | | | |

From the results, it is evident that the inclusion of acyl morpholine and polar aprotic solvent in the aromatic hydrocarbon reduces the formation of crystals.

### Example 3 - Emulsion dilution

Formulations containing 250 g/l of Tebuconazole were formulated together with 100 g/l of surfactant blend (36 wt% 2-ethyl hexanol ethoxylate propoxylate, 13 PO/20EO, 30 wt% calcium dodecyl bensen sulfonate, 14 wt% HD ocenol (60/65) ethoxylate, 23 EO and 20 wt% n-butanol) and diluted as follows:
1) N-formyl morfoline : propylene carbonate (in the weight ratio 4:1) up to 1 liter
2) N-formyl morfoline : propylene carbonate (in the weight ratio 4:1) 200g/l and up to 1 liter with Solvesso 150ND

Each formulation was emulsified into water (342 ppm CaCO₃-eq) at ambient temperature (∼22°C) in the volume ratio (formulation:water) 5 ml:95 ml dilution. The emulsions were poured into 100 ml glass test tubes and evaluated for stability by measuring the volume of cream/oil/sedimentation visible in the test tubes after 2 hours. The appearance was judged by ocular inspection with the naked eye and the results can be seen in table 3

**Table 3**

| **Formulation** | **Appearance after 2 hrs** |
|---|---|
| **28**** | 2 ml of sedimentation/crystals |
| **29** | No cream or sedimentation |

| | |
|---|---|
| ** Comparative Experiment | |

## Claims

1. A formulation comprising:
a) at least one agriculturally active ingredient;
b) at least one aromatic hydrocarbon; and
c) at least one acyl morpholine according to the formula (I), 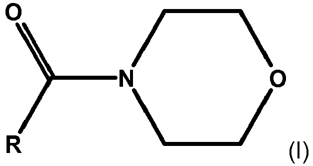 where R is H, CH₃ or C₂H₅.

2. A formulation according to claim 1, wherein said agriculturally active ingredient is selected from the group consisting of pesticides and plant growth regulators, preferably pesticides selected from the group consisting of fungicides, herbicides, insecticides, miticides, nematicides, acaricides, molluscicides and mixtures thereof

3. A formulation according to claim 1 or 2, wherein said agriculturally active ingredient is selected from the group consisting of triazoles, strobilurins, alkylenebis(dithiocarbamate) compounds, benzimidazoles, phenoxy carboxylic acids, benzoic acids, sulfonylureas, triazines, pyridine carboxylic acids, neonicotinides, amidines, organophosphates, pyrethroids and mixtures thereof.

4. A formulation according to any one of the preceding claims, wherein said aromatic hydrocarbon has an initial boiling point (IBP) of from 100 to 270°C, preferably in the range of 150 to 250°C and a dry point (DP) of from 100 to 320°C, preferably in the range of from 170 to 300°C.

5. A formulation according to any one of the preceding claims, further comprising d) at least one polar aprotic solvent different from an acyl morpholine of formula (I).

6. A formulation according to claim 5, wherein said polar aprotic solvent different from an acyl morpholine of formula (I) is selected from the group consisting of a sulfoxide, an amide, a hydrocarbyl carbonate, a hydrocarbylene carbonate and mixtures thereof, preferably selected from the group consisting of dimethyl sulfoxide, propylene carbonate and mixtures thereof.

7. A formulation according to any one of the preceding claims, comprising an acyl morpholine which is N-formyl morpholine and a polar aprotic solvent which is propylene carbonate.

8. A formulation according to any one of the preceding claims, wherein the weight ratio between acyl morpholine according to the formula (I) and polar aprotic solvent different from an acyl morpholine of formula (I) is from 70:30 to 90:10, preferably from 75:25 to 85:15.

9. A formulation according to any one of the preceding claims, further comprising e) at least one additional component selected from the group consisting of adjuvants, surfactants, emulsifiers, wetting agents, rheology modifiers and mixtures thereof.

10. A formulation according to any one of the preceding claims, comprising:
from 10 to 800 g/l of a);
from 50 to 900 g/l of b);
from 10 to 600 g/l of the total of c) and if present d); and
from 0 to 250 g/l of e);
based on the total volume of an anhydrous formulation.

11. A formulation according to any one of the preceding claims comprising from 10 to 200 g/l of emulsifier, based on the total volume of an anhydrous formulation.

12. A formulation according to any one of the preceding claims comprising at most 10, preferably at most 1 wt% water based on the total weight of the formulation.

13. A formulation according to any one of the claims 1 to 11, comprising at least 90, preferably at least 99 wt% water based on the total weight of the formulation, preferably in the form of an oil-in-water emulsion.

14. A method for treating a plant or seed, comprising contacting said plant or seed with a formulation according to any one of the claims 1 to 13.

15. The use of a solvent system comprising
(i)an aromatic hydrocarbon;
(ii)an acyl morpholine according to the formula (I), 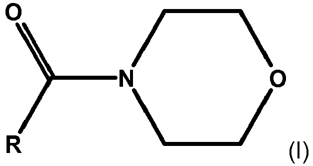 where R is H, CH₃ or C₂H₅,
(iii) optionally a polar aprotic solvent different from an acyl morpholine of formula (I), and
(iv) optionally additional components;
as a solvent for an agriculturally active ingredient.

## Patentansprüche

1. Formulierung umfassend:
a) mindestens einen landwirtschaftlich wirksamen Inhaltsstoff;
b) mindestens einen aromatischen Kohlenwasserstoff; und
c) mindestens ein Acylmorpholin nach der Formel (I), 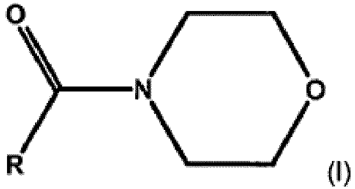 wobei R gleich H, CH₃ oder C₂H₅ ist.

2. Formulierung nach Anspruch 1, wobei der landwirtschaftlich wirksame Inhaltsstoff aus der Gruppe ausgewählt ist, bestehend aus Pestiziden und Pflanzenwachstumsregulatoren, vorzugsweise Pestiziden, ausgewählt aus der Gruppe bestehend aus Fungiziden, Herbiziden, Insektiziden, Mitiziden, Nematiziden, Akariziden, Molluskiziden und Mischungen daraus.

3. Formulierung nach Anspruch 1 oder 2, wobei der landwirtschaftlich wirksame Inhaltsstoff aus der Gruppe ausgewählt ist, bestehend aus Triazolen, Strobilurinen, Akylenbis(Dithihocarbamat)-Verbindungen, Benzimidazolen, Phenoxycarbonsäuren, Benzoesäuren, Sulfonylharnstoffen, Triazinen, Pyridincarbonsäuren, Neonikotinoiden, Amidinen, Organophosphaten, Pyrethroiden und Mischungen daraus.

4. Formulierung nach einem der vorhergehenden Ansprüche, wobei der aromatische Kohlenwasserstoff einen Anfangssiedepunkt (IBP) von 100 bis 270°C, vorzugsweise in dem Bereich von 150 bis 250°C hat, und einen Trockenpunkt (DP) von 100 bis 320°C, vorzugsweise in dem Bereich von 170 bis 300°C hat.

5. Formulierung nach einem der vorhergehenden Ansprüche, weiterhin umfassend d) mindestens ein polares aprotisches Lösungsmittel, das sich von einem Acylmorpholin der Formel (I) unterscheidet.

6. Formulierung nach Anspruch 5, wobei das polare aprotische Lösungsmittel, das sich von einem Acylmorpholin der Formel (I) unterscheidet, aus der Gruppe ausgewählt ist, bestehend aus einem Sulfoxid, einem Amid, einem Hydrocarbylcarbonat, einem Hydrocarbylencarbonat und Mischungen daraus, vorzugsweise aus der Gruppe ausgewählt ist, bestehend aus Dimethylsulfoxid, Propylencarbonat und Mischungen daraus.

7. Formulierung nach einem der vorhergehenden Ansprüche, umfassend ein Acylmorpholin, das N-Formylmorpholin ist, und ein polares aprotisches Lösungsmittel, das Propylencarbonat ist.

8. Formulierung nach einem der vorhergehenden Ansprüche, wobei das Gewichtsverhältnis zwischen Acylmorpholin nach der Formel (I) und dem polaren aprotischen Lösungsmittel, das sich von einem Acylmorpholin der Formel (I) unterscheidet, von 70:30 bis 90:10, vorzugsweise von 75:25 bis 85:15 beträgt.

9. Formulierung nach einem der vorhergehenden Ansprüche, weiterhin umfassend e) mindestens eine zusätzliche Komponente, ausgewählt aus der Gruppe bestehend aus Adjuvantien, Tensiden, Emulgatoren, Benetzungsmitteln, Rheologie-Modifizierern und Mischungen daraus.

10. Formulierung nach einem der vorhergehenden Ansprüche, umfassend:
von 10 bis 800 g/l von a),
von 50 bis 900 g/l von b);
von 10 bis 600 g/l der Gesamtsumme von c) und wenn vorhanden d); und
von 0 bis 250 g/l von e);
basierend auf dem Gesamtvolumen einer wasserfreien Formulierung.

11. Formulierung nach einem der vorhergehenden Ansprüche, umfassend von 10 bis 200 g/l eines Emulgators, basierend auf dem Gesamtvolumen einer wasserfreien Formulierung.

12. Formulierung nach einem der vorhergehenden Ansprüche, umfassend höchstens 10, vorzugsweise höchstens 1 Gewichts.-% Wasser, basierend auf dem Gesamtgewicht der Formulierung.

13. Formulierung nach einem der Ansprüche 1 bis 11, umfassend mindestens 90, vorzugsweise mindestens 99 Gewichts.-% Wasser, basierend auf dem Gesamtgewicht der Formulierung, vorzugsweise in Form einer Öl-in-Wasser-Emulsion.

14. Verfahren zur Behandlung einer Pflanze oder einer Saat, umfassend das Inkontaktbringen der Pflanze oder der Saat mit einer Formulierung nach einem der Ansprüche 1 bis 13.

15. Verwendung eines Lösungsmittelsystems umfassend
(i) einen aromatischen Kohlenwasserstoff
(ii) ein Acylmorpholin nach der Formel (I), 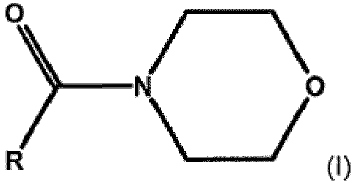 wobei R gleich H, CH₃ oder C₂H₅ ist,
(iii) wahlweise ein polares aprotisches Lösungsmittel, das sich von einem Acylmorpholin der Formel (I) unterscheidet, und
(iv) wahlweise weitere Komponenten;
als Lösungsmittel für einen landwirtschaftlich wirksamen Inhaltsstoff.

## Revendications

1. Formulation comprenant :
a) au moins un ingrédient actif sur le plan agricole ;
b) au moins un hydrocarbure aromatique ; et
c) au moins une acylmorpholine selon la formule (I), 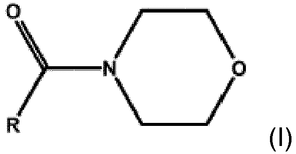 où R représente H, CH₃ ou C₂H₅.

2. Formulation selon la revendication 1, dans laquelle ledit ingrédient actif sur le plan agricole est choisi dans le groupe constitué de pesticides et de régulateurs de croissance végétale, de préférence de pesticides choisis dans le groupe constitué de fongicides, d'herbicides, d'insecticides, de miticides, de nématicides, d'acaricides, de molluscicides et de mélanges de ceux-ci.

3. Formulation selon la revendication 1 ou 2, dans laquelle ledit ingrédient actif sur le plan agricole est choisi dans le groupe constitué de triazoles, de strobilurines, de composés à base d'alkylènebis(dithiocarbamate), de benzimidazoles, d'acides phénoxy-carboxyliques, d'acides benzoïques, de sulfonylurées, de triazines, d'acides pyridine-carboxyliques, de néonicotinoïdes, d'amidines, d'organophosphates, de pyréthrinoïdes et de mélanges de ceux-ci.

4. Formulation selon l'une quelconque des revendications précédentes, dans laquelle ledit hydrocarbure aromatique a un point initial d'ébullition (IBP) allant de 100 à 270°C, de préférence compris dans la plage allant de 150 à 250°C et un point sec (DP) allant de 100 à 320°C, de préférence compris dans la plage allant de 170 à 300°C.

5. Formulation selon l'une quelconque des revendications précédentes, comprenant en outre
d) au moins un solvant aprotique polaire différent d'une acylmorpholine de formule (I).

6. Formulation selon la revendication 5, dans laquelle ledit solvant aprotique polaire différent d'une acylmorpholine de formule (I) est choisi dans le groupe constitué d'un sulfoxyde, d'un amide, d'un carbonate d'hydrocarbyle, d'un carbonate d'hydrocarbylène, et de mélanges de ceux-ci, de préférence choisi dans le groupe constitué de diméthylsulfoxyde, de carbonate de propylène et de mélanges de ceux-ci.

7. Formulation selon l'une quelconque des revendications précédentes, comprenant une acylmorpholine qui est la N-formylmorpholine et un solvant aprotique polaire qui est le carbonate de propylène.

8. Formulation selon l'une quelconque des revendications précédentes, dans laquelle le rapport en poids entre l'acylmorpholine selon la formule (I) et un solvant aprotique polaire différent de l'acylmorpholine de formule (I) varie de 70:30 à 90:10, de préférence de 75:25 à 85:15.

9. Formulation selon l'une quelconque des revendications précédentes, comprenant en outre
e) au moins un composant supplémentaire choisi dans le groupe constitué d'adjuvants, de tensioactifs, d'émulsifiants, d'agents mouillants, de modificateurs de rhéologie et de mélanges de ceux-ci.

10. Formulation selon l'une quelconque des revendications précédentes, comprenant :
de 10 à 800 g/l de a) ;
de 50 à 900 g/l de b) ;
de 10 à 600 g/l du total de c) et le cas échéant de d) ; et
de 0 à 250 g/l de e) ;
par rapport au volume total d'une formulation anhydre.

11. Formulation selon l'une quelconque des revendications précédentes, comprenant de 10 à 200 g/l d'émulsifiant, par rapport au volume total d'une formulation anhydre.

12. Formulation selon l'une quelconque des revendications précédentes, comprenant au plus 10, de préférence au plus 1% en poids d'eau par rapport au poids total de la formulation.

13. Formulation selon l'une quelconque des revendications 1 à 11, comprenant au moins 90, de préférence au moins 99% en poids d'eau par rapport au poids total de la formulation, de préférence sous la forme d'une émulsion huile-dans-eau.

14. Procédé de traitement d'une plante ou d'une semence, comprenant la mise en contact de ladite plante ou semence avec une formulation selon l'une quelconque des revendications 1 à 13.

15. Utilisation d'un système de solvant comprenant
(i) un hydrocarbure aromatique ;
(ii) une acylmorpholine selon la formule (I), 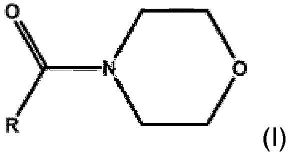 où R représente H, CH₃ ou C₂H₅,
(iii) éventuellement un solvant aprotique polaire différent d'une acylmorpholine de formule (I), et
(iv) éventuellement des composants supplémentaires ;
en tant que solvant pour un ingrédient actif sur le plan agricole.
